# EUROPEAN PATENT APPLICATION

(11) **EP 2 465 831 A1**
(43) Date of publication of application: **20.06.2012**
(21) Application number: 09848161.7
(22) Date of filing: 10.08.2009
(51) Int. Cl.: C03C 4/12, C03C 3/095

(54) **GREEN LIGHT EMITTING GLASS USED FOR ULTRAVIOLET LED AND PREPARATION METHOD THEREOF**

(71) Applicant: Ocean's King Lighting Science&Technology Co., Ltd., Guangdong 518052 (CN)
(72) Inventor: ZHOU, Mingjie, Nanshan District, Shenzhen, Guangdong 518052 (CN); MA, Wenbo, Nanshan District, Shenzhen, Guangdong 518052 (CN); SHI, Zhaopu, Nanshan District, Shenzhen, Guangdong 518052 (CN)
(74) Representative: Michalski, Stefan
(86) International application number: PCT/CN2009/073161
(87) International publication number: WO 2011/017831

(57) **Abstract**

A green luminescent glass for ultraviolet LED and a preparation method for glass are disclosed. The preparation method includes: weighing raw materials of CaCO₃, Al₂O₃, SiO₂, CeO₂ and Tb₄O₇ respectively and mixing the raw materials evenly; melting the raw materials at 1500∼1700°C for 0.5∼3 hours and then molding to form a glass; annealing the formed glass in reducing atmosphere with temperature of 650∼1050°C for 3∼20 hours; and cooling the glass to room temperature to obtain the green luminescent glass for ultraviolet LED. The green luminescent glass for ultraviolet LED prepared according to the preparation method of the disclosure has advantages of high luminous intensity, uniformity and stability.

## Description

### FIELD OF THE INVENTION

The present disclosure relates to luminescent materials, and more particularly relates to a green luminescent glass for ultraviolet LED and preparation method thereof.

### BACKGROUND OF THE INVENTION

LED lighting device has become a new kind of luminescent element with advantages of small size, vibration resistance, energy-saving, high luminous efficiency, wide applicability, pollution-free and so on, and can be manufactured into many different devices used in mutable environments. Especially, as a third generation semiconductor material, GaN has been widely used as semiconductor light source of which the power consumption is only one tenth and the lifetime can reach over 100,000 hours compared with the normal incandescent with the same luminance. Therefore, LED lighting devices have been widely used in photoelectron and lighting engineering areas, such as indicator lights, display lights, decorating lights, backlights and some conventional lighting areas.

The present commercial white LED lighting devices which emit white light mainly use blue LED chips covered by phosphors which can emit yellow, green or orange light when radiated by blue light. The luminous efficiency of such phosphor emitting yellow, green or orange light is quite high, and the preparation method for the phosphor is quite mature right now. However, there are still some weaknesses of these LED lighting devices: firstly, as the epoxy resin used for encapsulation is easy to degrade, the lifetime of these devices is thus reduced; secondly, the preparation method is rather complicate and the cost is very high; thirdly, chromaticity coordinate of such LED lighting device is instable and the emitted white light is easy to drift.

Therefore, there is room for improvement within the art.

### SUMMARY OF THE INVENTION

In one aspect of present disclosure, a green luminescent glass for ultraviolet (hereinafter referred to as UV) LED which can directly substitute the conventional epoxy-resin used to encapsulate the chip and with high luminous intensity, uniformity and low cost is desired to overcome the problems described above.

In one embodiment, a green luminescent glass for UV LED is provided with the chemical formula: aCaO·bAl₂O₃·cSiO₂·xCeO₂·yTb₂O₃, wherein the a, b, c, x, and y are, by mole parts, 20∼55, 15∼35, 20∼60, 0∼5, 0.01∼20, respectively.

In a preferable embodiment, the a, b, c, x, and y are, by mole parts, 25∼50, 15∼30, 25∼50, 0.01∼2, 0.1∼10, respectively.

In another aspect of present disclosure, a preparation method for the green luminescent glass for UV LED with advantages of less steps, easy control of the reaction conditions, easy operation and low cost is desired.

A preparation method of a green luminescent glass for UV LED includes the following steps: weighing raw materials of CaCO₃, Al₂O₃, SiO₂, CeO₂ and Tb₄O₇ respectively and mixing the raw materials evenly; melting the raw materials at 1500∼1700°C for 0.5∼3 hours and then molding to form a glass; annealing the glass in reducing atmosphere with temperature of 650∼1050°C for 3∼20 hours, and cooling the glass to room temperature to obtain a green luminescent glass for UV LED.

In a preferable embodiment, the method further includes the following steps: transferring the mixed raw materials into a corundum crucible or platinum crucible; placing the corundum crucible or platinum crucible into a high temperature furnace and melting the raw materials at 1550∼1650C for 1∼2 hours; transferring the melted raw materials into a cast iron mold to form the glass; transferring the formed glass into an anneal furnace and then annealing in the reducing atmosphere with the temperature of 750∼950°C for 4∼12 hours; and cooling to room temperature to obtain the green luminescent glass for UV LED.

In a preferable embodiment, when weighing the raw materials of CaCO₃, Al₂O₃, SiO₂, CeO₂ and Tb₄O₇ needs to accord to chemical formula: aCaO·bAl₂O₃·cSiO₂·xCeO₂·yTb₂O₃, wherein a, b, c, x, and y are, by mole parts, 20∼55, 15∼35, 20∼60, 0∼5, 0.01∼20, respectively.

In a preferable embodiment, a, b, c, x, and y are, by mole parts, 25∼50, 15∼30, 25∼50, 0.01∼2, 0.1∼10, respectively.

In a preferable embodiment, the purity quotient of the raw materials is no less than analytical reagent (hereinafter referred to as AR).

In a preferable embodiment, the reducing atmosphere is H₂, CO, or the mixture of H₂ and N₂.

In a preferable embodiment, the reducing atmosphere can also be C monomer.

By adding rare-earth ions such as Ce⁴⁺ and Tb³⁺ into the raw materials of conventional silicate glass, the new green luminescent glass for UV LED with high luminescent property is thus obtained. When radiated by UV, the green luminescent glass can emit highly uniform and intense green light which has a wide excitation band with UV peaking at 365nm. Compared with the conventional powder materials, the green luminescent glass has the following advantages while radiated by blue or purple light: firstly, it has excellent light transmission property; secondly, it has good chemical stability and heat stability; thirdly, it can substitute the conventional epoxy resin and can be used to encapsulate the LED chip directly. The luminescent glass with these advantages mentioned above is quite suitable to be applied as luminous dielectric material in the LED lighting area.

The preparation method of the green luminescent glass according to the present disclosure is simple and its cost is low. The green luminescent glass can be simply prepared into large and different shaped articles. The method also solves some problems such as low luminous intensity of the luminous active particles in the glass.

### BRIEF DESCRIPTION OF THE DRAWINGS

FIG 1 is a comparison drawing of the excitation and emission spectra of the luminescent glasses according to example 2 and example 5;

FIG 2 is a drawing of the emission spectrum of the green luminescent glass according to example 2 radiated by 370nm UV;

FIG 3 is a drawing of the emission spectrum of the green luminescent glass according to example 3 radiated by 370nm UV;

FIG 4 is a drawing of the emission spectrum of the green luminescent glass according to example 4 radiated by 362nm UV;

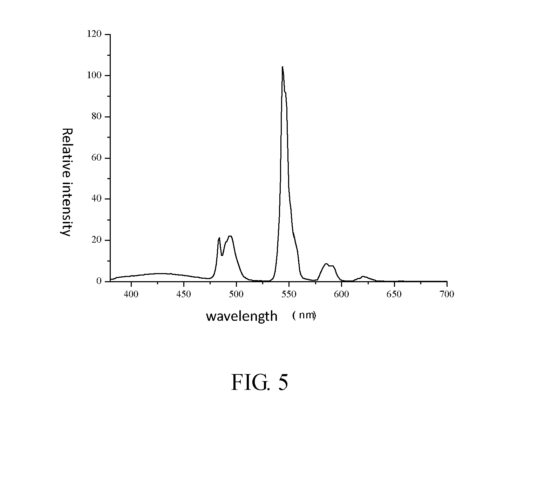

FIG 5 is a drawing of the emission spectrum of the green luminescent glass according to example 5 radiated by 368nm UV;

FIG 6 is a drawing of the emission spectrum of the green luminescent glass according to example 7 radiated by 327nm UV;

The above mentioned emission spectra are tested using Shimadzu RF-5301 fluorescence spectrometer.

### DETAILED DESCRIPTION

The disclosure is illustrated by way of example and not by way of limitation in the figures of the accompanying drawings in which like references indicate similar elements. It should be noted that references to "an" or "one" embodiment in this disclosure are not necessarily to the same embodiment, and such references mean at least one.

Example 1

The chemical formula of a green luminescent glass for UV LED is 55CaO·20Al₂O₃·25SiO₂·0.01 Tb₂O₃.

16.6g of CaCO₃ (AR), 6.15g of Al₂O₃ (AR), 4.53g of SiO₂ (AR) and 0.01g of Tb₄O₇ (AR) are weighed respectively, and then mixed and milled in mortar to obtain a uniform mixture. The mixture is introduced into a platinum crucible and heated at 1700°C for 1 hour in a high-temperature furnace to obtain a melted glass, and then the melted glass is poured into a cast iron mold to be cooled and molded into a transparent glass. The transparent glass is placed into an anneal furnace with reducing atmosphere (95% by volume of N₂ and 5% by volume of H₂), and heated at 650°C for 20 hours, and the green luminescent glass with the chemical formula 55CaO·20Al₂O₃·25SiO₂·0.01Tb₂O₃ is finally obtained after the transparent glass is cooled to the room temperature.

Example 2

The chemical formula of a green luminescent glass for UV LED is 48CaO·17Al₂O₃·25SiO₂·10Tb₂O₃.

10.02g of CaCO₃ (AR), 3.61g of Al₂O₃ (AR), 3.13g of SiO₂ (AR) and 7.79g of Tb₄O₇ (AR) are weighed respectively, and then mixed and milled in mortar to obtain a uniform mixture. The mixture is introduced into a corundum crucible and heated at 1650°C for 30 minutes in a high-temperature furnace to obtain a melted glass, and then the melted glass is poured into a cast iron mold to be cooled and molded into a transparent glass. The transparent glass is placed into an anneal furnace with reducing atmosphere (95% by volume of N₂ and 5% by volume of H₂), and heated at 950°C for 3 hours, and the green luminescent glass with the chemical formula 48CaO·17Al₂O₃·25SiO₂·10Tb₂O₃ is finally obtained after the transparent glass is cooled.

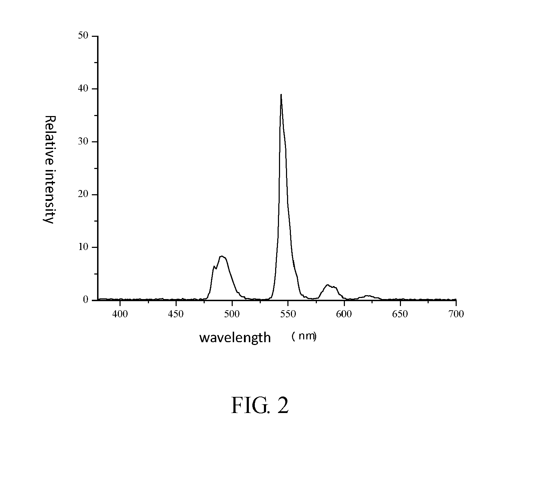

Referring to FIG 2, the green luminescent glass has a strong green light emission peaking at 544nm when radiated by UV light peaking at 370 nm.

Example 3

The chemical formula of a green luminescent glass for UV LED is 50CaO·20Al₂O₃·28SiO₂·0.5CeO₂·1.0Tb₂O₃.

14.34g of CaCO₃ (AR), 5.84g of Al₂O₃ (AR), 4.82g of SiO₂ (AR) ,0.24g of CeO₂ (AR) and 1.07g of Tb₄O₇ (AR) are weighed respectively, and then mixed and milled in mortar to obtain a uniform mixture. The mixture is introduced into a corundum crucible and heated at 1650°C for 1 hour in a high-temperature furnace to obtain a melted glass, and then the melted glass is poured into a cast iron mold to be cooled and molded into a transparent glass. The transparent glass is placed into an anneal furnace with reducing atmosphere (95% by volume of N₂ and 5% by volume of H₂), and heated at 900°C for 5 hours, and the green luminescent glass with the chemical formula 50CaO·20Al₂O₃·28SiO₂·0.5CeO₂·1.0Tb₂O₃ is finally obtained after the transparent glass is cooled.

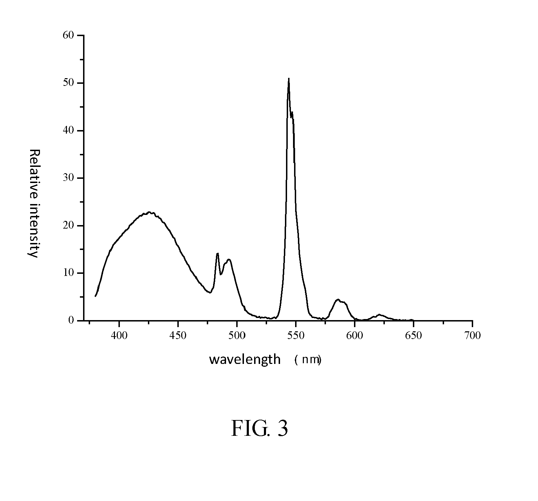

Referring to FIG 3, the green luminescent glass has a strong green light peaking at 544nm when radiated by UV light peaking at 370nm.

Example 4

The chemical formula of a green luminescent glass for UV LED is 50CaO·18Al₂O₃·27SiO₂·0.5CeO₂·5Tb₂O₃.

12.23g of CaCO₃ (AR), 4.48g of Al₂O₃ (AR), 3.96g of SiO₂ (AR) ,0.21g of CeO₂ (AR) and 4.57g of Tb₄O₇ (AR) are weighed respectively, and then mixed and milled in mortar to obtain a uniform mixture. The mixture is introduced into a corundum crucible and heated at 1650°C for 1 hour in a high-temperature furnace to obtain a melted glass, and then the melted glass is poured into a cast iron mold to be cooled and molded into a transparent glass. The transparent glass is placed into an anneal furnace with reducing atmosphere (95% by volume of N₂ and 5% by volume of H₂), and heated at 900°C for 5 hours, and the green luminescent glass with the chemical formula 50CaO·18Al₂O₃·27SiO₂·0.5CeO₂·5Tb₂O₃ is finally obtained after the transparent glass is cooled.

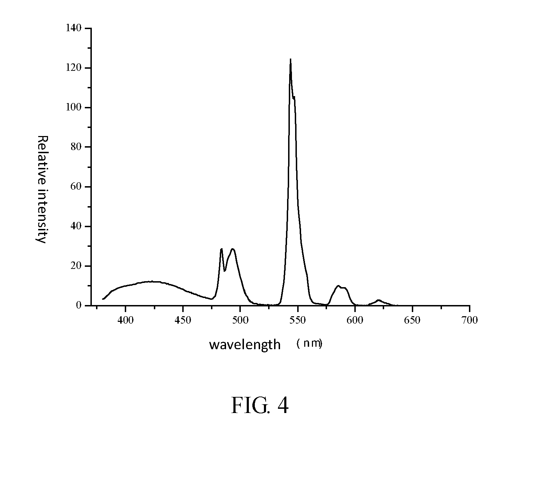

Referring to FIG 4, the green luminescent glass has a strong green light peaking at 544nm when radiated by UV light peaking at 362nm.

Example 5

The chemical formula of a green luminescent glass for UV LED is 47.5CaO·17Al₂O₃·25SiO₂·0.5CeO₂·10Tb₂O₃.

9.85g of CaCO₃ (AR), 3.59g of Al₂O₃ (AR), 3.11g of SiO₂ (AR) ,0.17g of CeO₂ (AR) and 7.75g of Tb₄O₇ (AR) are weighed respectively, and then mixed and milled in mortar to obtain a uniform mixture. The mixture is introduced into a corundum crucible and heated at 1650°C for 1 hour in a high-temperature furnace to obtain a melted glass, and then the melted glass is poured into a cast iron mold to be cooled and molded into a transparent glass. The transparent glass is placed into an anneal furnace with reducing atmosphere (95% by volume of N₂ and 5% by volume of H₂), and heated at 900°C for 3 hours, and the green luminescent glass with the chemical formula 47.5CaO·17Al₂O₃·25SiO₂·0.5CeO₂·10Tb₂O₃ is finally obtained after the transparent glass is cooled.

Referring to FIG 4, the green luminescent glass has a strong green light peaking at 544nm when radiated by UV light peaking at 358nm.

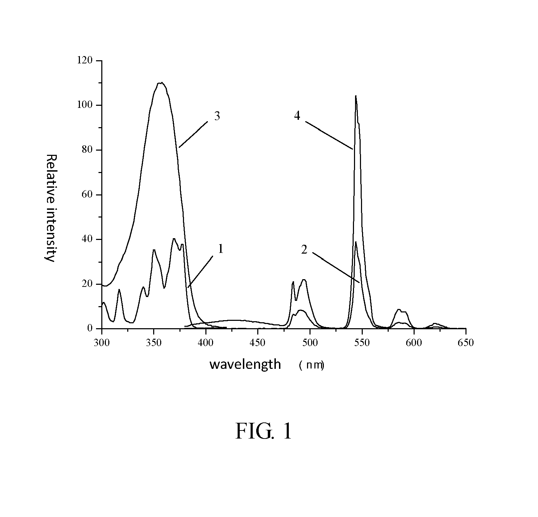

FIG 1 shows a comparison of the excitation spectrum and the emission spectrum of the green luminescent glasses between the example 2 and the example 5. Wherein, curve 1 stands for the excitation spectrum of the green luminescent glass of example 2, curve 2 stands for the emission spectrum of the green luminescent glass of example 2, curve 3 stands for the excitation spectrum of the green luminescent glass of example 5, and curve 4 stands for the emission spectrum of the green luminescent glass of example 5. According to FIG 1, the luminous intensity at 544nm of the green luminescent glass obtained in example 5 is 2.6 times higher than the glass obtained in example 2 after adding CeO₂ into the glass.

Example 6

The chemical formula of a green luminescent glass for UV LED is 24CaO·35Al₂O₃·20SiO₂·0.01CeO₂·20Tb₂O₃.

3.53g of CaCO₃ (AR), 5.24g of Al₂O₃ (AR), 1.76g of SiO₂ (AR) ,0.0025g of CeO₂ (AR) and 10.99g of Tb₄O₇ (AR) are weighed respectively, and then mixed and milled in mortar to obtain a uniform mixture. The mixture is introduced into a platinum crucible and heated at 1500°C for 3 hours in a high-temperature furnace to obtain a melted glass, and then the melted glass is poured into a cast iron mold to be cooled and molded into a transparent glass. The transparent glass is placed into an anneal furnace with H₂ atmosphere, and heated at 1000°C for 4 hours, and the green luminescent glass with the chemical formula 24CaO·35Al₂O₃·20SiO₂·0.01CeO₂·20Tb₂O₃ is finally obtained after the transparent glass is cooled.

Example 7

The chemical formula of a green luminescent glass for UV LED is 32CaO·24Al₂O₃·31SiO₂·0.5CeO₂·12Tb₂O₃.

5.95g of CaCO₃ (AR), 4.54g of Al₂O₃ (AR), 3.46g of SiO₂ (AR) ,0.15g of CeO₂ (AR) and 8.68g of Tb₄O₇ (AR) are weighed respectively, and then mixed and milled in mortar to obtain a uniform mixture. The mixture is introduced into a corundum crucible and heated at 1650°C for 1 hour in a high-temperature furnace to obtain a melted glass, and then the melted glass is poured into a cast iron mold to be cooled and molded into a transparent glass. The transparent glass is placed into an anneal furnace with reducing atmosphere (95% by volume of N₂ and 5% by volume of H₂), and heated at 1050°C for 10 hours, and the green luminescent glass with the chemical formula 32CaO·24Al₂O₃·31SiO₂·0.5CeO₂·12Tb₂O₃ is finally obtained after the transparent glass is cooled.

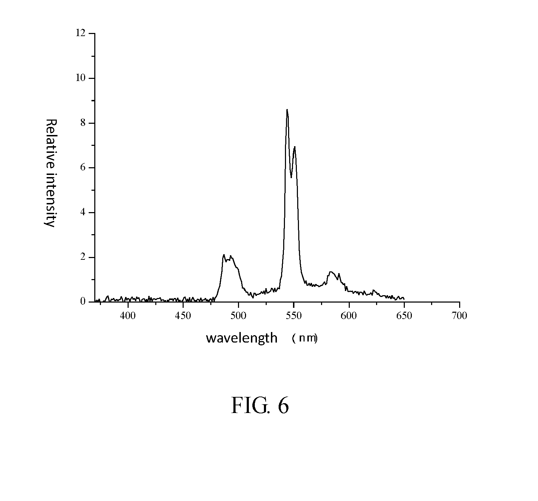

Referring to FIG 6, the green luminescent glass has a strong green light peaking at 544nm when radiated by UV light peaking at327nm.

Example 8

The chemical formula of a green luminescent glass for UV LED is 25CaO·15Al₂O₃·50SiO₂·5CeO₂·15Tb₂O₃.

4.27g of CaCO₃ (AR), 2.61g of Al₂O₃ (AR), 5.12g of SiO₂ (AR), 1.47g of CeO₂ (AR) and 9.59g of Tb₄O₇ (AR) are weighed respectively, and then mixed and milled in mortar to obtain a uniform mixture. The mixture is introduced into a corundum crucible and heated at 1550°C for 2 hours in a high-temperature furnace to obtain a melted glass, and then the melted glass is poured into a cast iron mold to be cooled and molded into a transparent glass. The transparent glass is placed into an anneal furnace with CO atmosphere, and heated at 750°C for 12 hours, and the green luminescent glass with the chemical formula 25CaO·15Al₂O₃·50SiO₂·5CeO₂·15Tb₂O₃ is finally obtained after the transparent glass is cooled.

Example 9

The chemical formula of the green luminescent glass for UV LED is 20CaO·30Al₂O₃·60SiO₂·2CeO₂·0.1Tb₂O₃.

5.07g of CaCO₃ (AR), 7.74g of Al₂O₃ (AR), 9.13g of SiO₂ (AR), 0.87g of CeO₂ (AR) and 0.094g of Tb₄O₇ (AR) are weighed respectively, and then mixed and milled in mortar to obtain a uniform mixture. The mixture is introduced into a corundum crucible and heated at 1500°C for 2 hours in a high-temperature furnace to obtain a melted glass, and then the melted glass is poured into a cast iron mold to be cooled and molded into a transparent glass. The transparent glass is placed into an anneal furnace with atmosphere including C monomer, and heated at 650°C for 10 hours, and the green luminescent glass with the chemical formula 20CaO·30Al₂O₃·60SiO₂·2CeO₂·0.1Tb₂O₃ is finally obtained after the transparent glass is cooled.

Although the invention has been described in language specific to structural features and/or methodological acts, it is to be understood that the invention defined in the appended claims is not necessarily limited to the specific features or acts described. Rather, the specific features and acts are disclosed as sample forms of implementing the claimed invention.

## Claims

1. A green luminescent glass for ultraviolet LED, mainly comprising a composition with the chemical formula: aCaO·bAl₂O₃·cSiO₂·xCeO₂·yTb₂O₃, wherein the a, b, c, x, and y are, by mole parts, 20∼55, 15∼35, 20∼60, 0∼5, 0.01∼20, respectively.

2. The green luminescent glass for ultraviolet LED according to claim 1, wherein the a, b, c, x, and y are, by mole parts, 25∼50, 15∼30, 25∼50, 0.01∼2, 0.1∼10, respectively.

3. A preparation method of a green luminescent glass for ultraviolet LED, comprising:
weighing raw materials of CaCO₃, Al₂O₃, SiO₂, CeO₂ and Tb₄O₇ respectively and mixing the raw materials evenly;
melting the raw materials at 1500∼1700°C for 0.5∼3 hours and then molding to form a glass;
annealing the said glass in reducing atmosphere with temperature of 650∼1050°C for 3∼20 hours and cooling the glass to room temperature to obtain the green luminescent glass for ultraviolet LED.

4. The preparation method according to claim 3, wherein the method further comprising the following step:
transferring the mixed raw materials into a corundum crucible or platinum crucible;
placing the corundum crucible or platinum crucible into a high-temperature furnace and melting the raw materials at 1550∼1650°C for 1∼2 hours;
transferring the melted raw materials into a cast iron mold to form the glass;
transferring the glass into an anneal furnace and then annealing in the reducing atmosphere with the temperature of 750∼950°C for 4∼12 hours; and
cooling to room temperature to obtain the green luminescent glass for ultraviolet LED

5. The preparation method according to claim 3 or 4, wherein when weighing the raw materials of CaCO₃, Al₂O₃, SiO₂, CeO₂ and Tb₄O₇ needs to accord to chemical formula: aCaO·bAl₂O₃·cSiO₂·xCeO₂·yTb₂O₃, wherein a, b, c, x, and y are, by mole parts, 20∼55, 15∼35, 20∼60, 0∼5, 0.01∼20, respectively.

6. The preparation method according to claim 5, wherein a, b, c, x, and y are, by mole parts, 25∼50, 15∼30, 25∼50, 0.01∼2, 0.1∼10, respectively.

7. The preparation method according to claim 3 or 4, wherein the purity quotient of the raw materials is no less than the analytical reagent.

8. The preparation method according to claim 3 or 4, wherein the reducing atmosphere is H₂, CO, or the mixture of H₂ and N₂.

9. The preparation method according to claim 3 or 4, wherein the reducing atmosphere is C monomer.
